# FASCICULE DE BREVET EUROPEEN

(11) **EP 3 018 836 B1**
(45) Date de publication et mention de la délivrance du brevet: **12.07.2017**
(21) Numéro de dépôt: 15193349.6
(22) Date de dépôt: 06.11.2015
(51) Int. Cl.: H04B 7/185, H04B 7/204

(54) **SYSTÈME DE RADIOCOMMUNICATIONS SATELLITAIRE MULTIFAISCEAUX LARGE BANDE CONFIGURÉ POUR UNE RÉUTILISATION AMÉLIORÉE DE FRÉQUENCES ET PROCÉDÉ DE RÉUTILISATION AMÉLIORÉE DE FRÉQUENCES**
BREITBAND-SATELLITEN-MEHRFACHSTRAHL-FUNKSYSTEM, DAS FÜR EINE VERBESSERTE WIEDERVERWENDUNG DER FREQUENZEN KONFIGURIERT IST, UND VERFAHREN ZUR VERBESSERTEN WIEDERVERWENDUNG VON FREQUENZEN
BROADBAND MULTI-BEAM SATELLITE RADIO COMMUNICATION SYSTEM CONFIGURED FOR IMPROVED REUSE OF FREQUENCIES AND METHOD FOR IMPROVED REUSE OF FREQUENCIES

(30) Priorité: 07.11.2014 FR 1402535
(43) Date de publication de la demande: 11.05.2016
(73) Titulaire: THALES, 92400 Courbevoie (FR)
(72) Inventeur: HIRSCH, Antonin, 06156 Cannes la Bocca Cedex (FR); CORBEL, Erwan, 06156 Cannes la Bocca Cedex (FR); MATEUS, Jean-Michel, 06156 Cannes la Bocca Cedex (FR); LENORMAND, Régis, 06156 Cannes la Bocca Cedex (FR); MAILLET, Olivier, 06156 Cannes la Bocca Cedex (FR)
(74) Mandataire: Tanguy, Yannick

(56) Documents cités:
- US-A1- 2011 053 628
- US-A1- 2011 149 837
- NG UI YI ET AL: "Interference coordination for the return link of a multibeam satellite system", 2014 7TH ADVANCED SATELLITE MULTIMEDIA SYSTEMS CONFERENCE AND THE 13TH SIGNAL PROCESSING FOR SPACE COMMUNICATIONS WORKSHOP (ASMS/SPSC), IEEE, 8 septembre 2014 (2014-09-08), pages 366-373, XP032668136, DOI: 10.1109/ASMS-SPSC.2014.6934569

## Description

La présente invention concerne un système de radiocommunications satellitaire multifaisceaux large bande à capacité élevée, configuré pour une réutilisation fractionnaire ou complète de fréquences en voie retour et un procédé de réutilisation améliorée de fréquences correspondant.

Les satellites actuels de radiocommunications à débit élevé et de seconde génération fonctionnant en bande Ka offrent des capacités de transmission élevées, de l'ordre de la centaine de Gbps, grâce à l'utilisation de faisceaux ou pinceaux fins d'antenne, combinée à une réutilisation spatiale des ressources fréquentielles dans une large bande fixée et à une stratégie efficace de modulation et de codage adaptatifs des canaux de transmission.

Parmi les schémas classiques de réutilisation de fréquences, le schéma qui correspond à une allocation de quatre sous-bandes distinctes sur l'ensemble des spots de couverture de l'antenne multifaisceaux suivant un motif à quatre couleurs est bien connu. Un schéma de réutilisation de fréquence à quatre couleurs, désigné par l'abréviation 4-FR (en anglais 4 colours Frequency Reuse), divise la totalité de la bande allouée au système en quatre sous-bandes de fréquences distinctes ou quatre couleurs, et laissent des faisceaux adjacents de l'antenne satellite d'émission ou de réception, émettre sur les différentes sous-bandes suivant une voie aller depuis le satellite vers le sol, ou recevoir sur les différentes sous-bandes suivant une voie retour depuis le sol vers le satellite. Un schéma de réutilisation de fréquences à quatre couleurs 4-FR permet d'avoir une distance minimale inter-faisceaux constante entre des faisceaux de même couleur, et en conséquence d'obtenir un compromis raisonnable entre le facteur de réutilisation de la bande et l'isolation entre les faisceaux.

Toutefois, lorsque, à nombre fixé de faisceaux d'une couverture géographique, on cherche à diminuer le nombre de couleurs, le C/I de réutilisation de fréquence, déterminé par la distance entre deux spots de même couleur diminue, ce qui diminue l'efficacité spectrale et limite, voir empêche, un gain de capacité de communication du système.

L'article de NG UI YI ET AL, intitulé "Interférence coordination for the return link of a multibeam satellite system", et publié dans le 7TH ADVANCED SATELLITE MULTIMEDIA SYSTEMS CONFERENCE AND THE 13TH SIGNAL PROCESSING FOR SPACE COMMUNICATIONS WORKSHOP (ASMS/SPSC), IEEE, le 8 septembre 2014, pages 366-373, décrit une méthode de réutilisation de fréquence selon l'art antérieur dans un système de radiocommunications satellitaire multifaisceaux. Pour améliorer la capacité totale du système dans un contexte de voie aller, c'est-à-dire des spots d'émission de l'antenne satellite, l'article de O. Vidal et al., intitulé « Fractional Frequency Reuse in fixed Boadband High Throughput Satellite systems » et publié dans les Proceedings of 31 st AIAA International Communication Satellite Systems Conférence, October 14-17, 2013, Florence, Italy, décrit une solution qui augmente la largeur de bande utilisée par spot pour chacun des spots d'une couverture. Cette solution met à profit des schémas de réutilisation fractionnée de fréquences, dénommée en anglais FFR pour « Fractional Frequency Reuse », qui sont utilisés dans les réseaux mobiles terrestre tels que WiMAX et LTE. La technique FFR appliquée dans un système de radiocommunications satellitaire dans un contexte de voie aller est une technique de réutilisation de fréquences qui recouvre les motifs classiques de couleurs, c'est-à-dire par exemple 3, 4, 7, 12 couleurs en les combinant avec des schémas de réutilisation plus denses des fréquences au sein de chaque faisceau. Le document de O. Vidal décrit sans limitation de généralité un schéma de réutilisation classique à 7 couleurs (7-FR) combiné à un schéma de pleine réutilisation d'une sous-bande (1-FR). Dans cette configuration, la sous-bande F0 du schéma 1-FR et les sous-bandes Fi du schéma 7-FR sont utilisées en permanence dans leurs faisceaux d'affectation mais à n'importe quel point de la couverture, le rapport C/I observé dans la sous-bande Fi sera supérieure au C/I observé dans la sous-bande F0 en raison d'un facteur de réutilisation plus faible pour F0.

Pour améliorer la capacité totale du système et dans un contexte de voie retour, c'est-à-dire des spots de réception de l'antenne satellite, l'article de F. Men et al., intitulé « Comparison of Frequency Reuse Schemes in OFDMA based Multi-beam Satellite Communications » et publié dans les Proceedings of 29th AIAA International Communications Satellite Systems Conférence, 28 November- 01 December 2011 Nara, Japan décrit une solution qui augmente la largeur de bande utilisée par spot de réception pour chacun des spots de réception d'une couverture sous la forme d'une première configuration et d'une deuxième configuration.

Dans la première configuration, une sous-bande de fréquences commune est allouée dans une zone interne de chaque spot suivant un schéma de pleine réutilisation d'une sous-bande (1-FR), et en combinaison un schéma de réutilisation classique à 3 couleurs (3-FR) de sous-bandes différentes de la sous-bande commune est utilisé pour les zones périphériques des spots de réception, chaque spot périphérique ayant une zone périphérique entourant sa zone interne. Il est à remarquer que ce partage des ressources entre une zone interne et une zone périphérique pour chaque spot de réception est rendu possible sur la voie retour en raison d'une fonctionnalité de géo-localisation implanté dans chaque terminal utilisateur lui permettant de déterminer dans quel spot et dans quelle zone parmi la zone interne et la zone périphérique il se trouve.

La deuxième configuration est identique à la première configuration et en diffère en ce que, pour un spot de réception donné, non seulement la bande commune à tous les spots est allouée à sa zone interne, mais également lui sont allouées les sous-bandes des zones périphériques des spots adjacents.

Bien que les deux configurations décrites permettent d'augmenter la capacité du système, cette augmentation reste limitée, lorsque la taille des zones internes et de la sous bande commune augmente, en raison des interférences générées par les zones internes des spots adjacents.

Le problème technique est d'augmenter la capacité satellitaire ou la densité de capacité de la voie retour d'un système de radiocommunications satellitaire multifaisceaux qui utilise un schéma de réutilisation fractionnaire FFR ou complète de fréquences suivant lequel une sous-bande commune à tous les spots de réception est allouée à la zone interne de chaque spot de réception.

De manière plus particulière, le problème technique est d'augmenter la surface de la zone interne de chaque spot de réception sans augmenter le rapport signal sur interférence C/I ou pour une surface de la zone interne de chaque spot de réception fixé augmenter le rapport signal sur interférence C/I.

A cet effet, l'invention a pour objet un système de radiocommunications satellitaire multifaisceaux large bande configuré pour une réutilisation complète ou fractionnaire de fréquences d'une bande totale BT allouée à une voie retour, comprenant :
.- un satellite ayant une antenne de réception multifaisceaux configurée pour former un ensemble d'au moins deux spots de réception adjacents d'une couverture terrestre; et
.- un ensemble de terminaux émetteurs répartis sur l'ensemble des spots, chaque terminal comprenant un moyen de positionnement géographique et un moyen d'émission d'une ressource de transmission allouée ;
.- un planificateur et allocateur de ressources de transmission voie retour, réalisé sous la forme d'un ou plusieurs calculateurs électroniques, configuré pour attribuer à un terminal émetteur lorsqu'il le demande une ressource de transmission voie retour en termes d'une sous-bande de fréquence en fonction de la position géographique du terminal émetteur et d'un plan d'allocation de ressources de transmission suivant lequel, chaque spot de réception est constitué d'une zone interne centrale et d'une zone périphérique entourant la zone interne centrale, et une même bande principale BP de fréquences d'un seul tenant ou en plusieurs morceaux, formant une partie ou la totalité de la bande totale, est allouée en totalité à chaque zone interne centrale, caractérisé en ce que suivant le plan d'allocation des ressources de transmission, la bande principale BP se décompose en un premier bouquet d'un premier nombre entier n1, supérieur ou égal à 2, de sous-bandes principales d'un seul tenant chacune, adjacentes ou séparées ; et la zone interne centrale de chaque spot de réception se décompose, à un facteur d'échelle près représentatif de la taille de la zone interne centrale, en un même motif cellulaire régulier de cellules dans lesquelles sont réparties unitairement les différentes sous-bandes principales du premier bouquet, le nombre de cellules du motif cellulaire étant égal au premier nombre n1 de sous-bandes principales du premier bouquet.

Suivant des modes particuliers de réalisation, le système de radiocommunications satellitaire comprend l'une ou plusieurs des caractéristiques suivantes :
.- suivant le plan d'allocation des ressources de transmission, la bande principale de fréquences BP forme une partie de la bande totale ; et les fréquences de la bande totale BT qui ne font pas partie de la bande principale BP forment une bande secondaire BS d'un seul tenant ou en plusieurs morceaux qui se décompose en un deuxième bouquet d'un nombre entier n2, supérieur ou égal à 3, de sous-bandes secondaires d'un seul tenant chacune, séparées ou adjacentes, réparties sur l'ensemble des zones périphériques des spots de réception suivant un schéma multicolore à n2 couleurs de sous-bandes secondaires ;
.- le deuxième nombre n2 de sous-bandes secondaires est un nombre entier compris dans l'ensemble des nombre 3, 4, 7 et 12 ;
.- le motif cellulaire est un motif de cellules de même taille et de forme triangulaire, carré ou hexagonale, et/ou le nombre de cellules n1 est compris entre 2 et 19 ;
.- le planificateur et allocateur de ressources de transmission voie retour est configuré pour attribuer à un terminal émetteur lorsqu'il le demande une ressource de transmission voie retour en termes d'une sous-bande de fréquence et d'une polarisation en fonction de la position géographique du terminal émetteur et du plan d'allocation de ressource suivant lequel, un troisième nombre entier n3, supérieur ou égal à 2, de polarisations différentes formant un ensemble d'états de polarisation, sont réparties sur l'ensemble des spots de réception et se superposent suivant un schéma de répartition multicolore à n3 couleurs de polarisations à la carte colorée d'allocation géographique des sous-bandes de fréquences ;
.- le troisième nombre n3 de polarisations est égal à 2 et les polarisations de la paire sont la polarisation circulaire gauche et la polarisation circulaire droite ou une première polarisation suivant un premier axe et une deuxième polarisation suivant un deuxième axe orthogonal au premier axe ;
.- l'antenne de réception est configurée pour former des spots de réception illuminés chacun suivant une loi gaussienne et ayant chacun en son bord un roll off supérieur ou égal à 7 dB ;
.- le système de radiocommunications satellitaire comprend en outre un système automatique de correction du dépointage de l'antenne causé notamment par des variations d'attitude de la plateforme ;
.- le système de radiocommunications satellitaire comprend en outre un ensemble de terminaux émetteurs répartis sur l'ensemble des spots, et chaque terminal comprend un moyen de positionnement géographique suffisamment précis pour déterminer dans quel spot il se trouve, s'il se trouve dans une zone interne ou dans un zone périphérique, et lorsqu'il se trouve dans une zone interne dans quel cellule il se trouve ;
.- le planificateur et allocateur de ressources de transmission voie retour est réparti sur l'ensemble des terminaux et/ou d'une ou plusieurs stations auxiliaires ou est en centralisé dans une station de contrôle des ressources et de leur planification ;
.- la taille de la zone centrale, représentative du facteur d'échelle varie en fonction du spot de réception et du temps, ou la taille de la zone centrale varie en fonction du spot de réception et est indépendante du temps, ou la taille de la zone centrale est constante indépendamment du spot de réception et du temps ;
.- le système de radiocommunications satellitaire est configuré pour une réception de la voie retour par le satellite dans une bande comprise dans l'ensemble des bandes C, X, Ku, Ka, L, S, Q et V ;

L'invention a également pout objet un procédé de réutilisation complète ou fractionnaire de fréquences d'une bande totale allouée à une voie retour dans un système de radiocommunication satellitaire multifaisceaux large bande, le système comprenant :
.- un satellite ayant une antenne de réception multifaisceaux configurée pour former un ensemble d'au moins deux spots de réception adjacents d'une couverture terrestre, et
.- un ensemble de terminaux émetteurs répartis sur l'ensemble des spots, chaque terminal comprenant un moyen de positionnement géographique ; le procédé comprenant les étapes consistant à
.- décomposer géographiquement chaque spot de réception en une zone interne centrale et une zone périphérique entourant la zone interne centrale; puis
.- attribuer aux zones internes de l'ensemble des spots de réception une sous-bande principale de fréquences, d'un seul tenant ou en plusieurs morceaux, formant une partie ou la totalité de la bande totale,
caractérisé en ce que le procédé comprend en outre les étapes consistant à :
.- décomposer la bande principale en un premier bouquet d'un premier nombre n1 supérieur ou égal à 2 de sous-bandes principales d'un seul tenant chacune, adjacentes ou séparées ; et
.- décomposer chaque zone interne centrale d'un spot de réception, à un facteur d'échelle près représentatif de la taille de la zone interne, en un même motif cellulaire de cellules dans lesquelles sont réparties unitairement les différentes sous-bandes principales du premier bouquet, le nombre de cellules du motif cellulaire étant égal au premier nombre n1 de sous-bandes secondaires du premier bouquet.

Suivant des modes particuliers de réalisation, le procédé de réutilisation complète ou fractionnaire de fréquences comprend l'une ou plusieurs des caractéristiques suivantes :
.- le procédé comprend en outre les étapes consistant à pour chaque terminal qui souhaite disposer d'une ressource de transmission, déterminer dans quel spot le terminal se trouve et s'il se trouve dans une zone interne ou une dans une zone périphérique, et lorsque le terminal se trouve dans une zone interne déterminer dans quelle cellule il se trouve, et dans ce cas allouer au terminal la sous-bande qui a été attribuée à la cellule du spot de réception dans lequel le terminal se trouve ;
.- la bande principale de fréquences forme une partie de la bande totale et le procédé comprend en outre les étapes consistant à décomposer les fréquences de la bande totale qui ne font pas partie de la principale en un deuxième bouquet d'un nombre n2 supérieur ou égal à 3 de sous-bandes secondaires d'un seul tenant, séparées ou adjacentes, réparties sur l'ensemble des zones périphériques suivant un schéma multicolore à n2 couleurs de sous-bandes secondaires, et pour chaque terminal qui souhaite disposer d'une ressource de transmission, après avoir déterminé dans quel spot il se trouve et s'il se trouve dans une zone interne ou périphérique, lorsque le terminal se trouve dans une zone périphérique, à allouer au terminal la sous-bande auxiliaire qui a été attribuée à la zone périphérique du spot de réception dans lequel le terminal se trouve ;
.- le procédé comprend en outre les étapes consistant à répartir sur l'ensemble des spots de réception un troisième nombre entier n3, supérieur ou égal à 2, de polarisations formant un ensemble d'états de polarisation, en superposant à la carte d'allocation géographique des sous-bandes suivant un schéma de répartition multicolore à n3 couleurs de polarisation ; et pour chaque terminal qui souhaite disposer d'une ressource de transmission formé d'un sous-bande de fréquence et d'une polarisation, après avoir déterminé dans quel spot de réception il se trouve, allouer au terminal la polarisation qui a été attribuée au spot de réception dans lequel le terminal se trouve, en plus de la sous-bande qui lui a été attribué ;
.- la taille de la zone centrale varie en fonction du spot et du temps, ou la taille de la zone centrale varie en fonction du spot de réception et est indépendante du temps, ou la aille de la zone centrale est constante indépendamment du spot de réception et du temps.

L'invention sera mieux comprise à la lecture de la description de plusieurs formes de réalisation qui va suivre, donnée uniquement à titre d'exemple et faite en se référant aux dessins sur lesquels :
- la Figure 1 est une vue d'un système de radiocommunications satellitaire, configuré pour une réutilisation de fréquences selon l'invention ;
- La Figure 2 est une vue d'un schéma de réutilisation géographique de fréquences suivant un premier mode de réalisation de l'invention sans réutilisation d'états de polarisations ;
- La Figure 3 est une vue d'un plan de fréquences associé au schéma de réutilisation de fréquences de la Figure 2 ;
- la Figure 4 est une vue d'un premier schéma de réutilisation géographique de fréquences sans réutilisation d'états de polarisation de l'état de la technique servant de première référence dans l'évaluation des performances de transmission d'un schéma de réutilisation de fréquences selon l'invention ;
- la Figure 5 est une vue d'une configuration pire cas en terme de C/I observé dans le cas de l'utilisation du schéma de réutilisation de fréquences de la Figure 2 ;
- la Figure 6 est une vue d'un schéma de réutilisation géographique de réutilisation de fréquences suivant un deuxième mode de réalisation de l'invention avec réutilisation de deux états de polarisation, et une vue d'un exemple d'une configuration pire cas en termes de C/I;
- la Figure 7 est une vue d'un deuxième schéma de réutilisation géographique de fréquences sans réutilisation d'états de polarisation de l'état de la technique servant de deuxième référence dans l'évaluation des performances de transmission d'un schéma de réutilisation de fréquences selon l'invention, et une vue d'un exemple d'une configuration pire cas en termes de C/I de deuxième référence ;
- la Figure 8 est un ordinogramme d'un procédé de réutilisation de fréquences suivant un premier mode de réalisation de l'invention sans réutilisation de polarisations et avec réutilisation de sous-bandes principales dans les zones internes des spots de réception ;
- la Figure 9 est un ordinogramme d'un procédé de réutilisation de fréquences suivant un deuxième mode de réalisation de l'invention sans réutilisation de polarisations ou d'états de polarisation, avec réutilisation de sous-bandes principales dans les zones internes et de sous-bandes secondaires dans les zones périphériques des spots de réception;
- la Figure 10 est un ordinogramme d'un procédé de réutilisation de fréquences suivant un troisième mode de réalisation de l'invention avec réutilisation de polarisations dans les spots de réception et avec réutilisation de sous-bandes principales dans les zones internes des spots de réception ;
- la Figure 11 est un ordinogramme d'un procédé de réutilisation de fréquences suivant un quatrième mode de réalisation de l'invention avec réutilisation de polarisations dans les spots de réception, et avec réutilisation de sous-bandes principales dans les zones internes et de sous-bandes secondaires dans les zones périphériques des spots de réception.

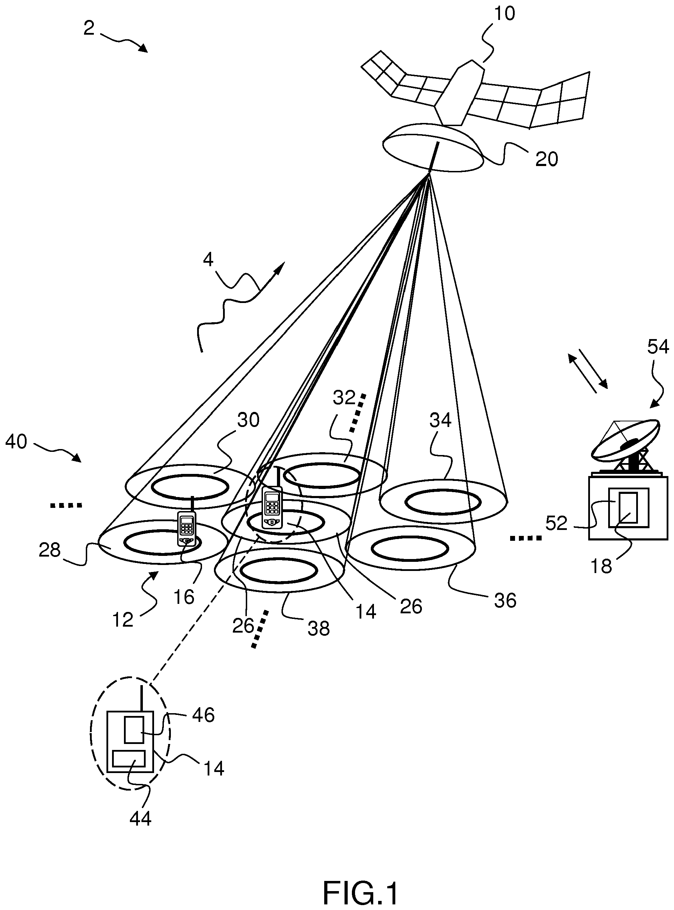

Suivant la Figure 1, un système 2 de radiocommunications satellitaire multifaisceaux large bande est configuré pour implémenter une réutilisation complète ou fractionnaire de fréquences d'une bande totale BT allouée à une voie retour 4.

Le système 2 de radiocommunications satellitaire comprend un satellite 10, un ensemble 12 de terminaux émetteurs 14, 16, et un planificateur et allocateur de ressources de transmission en voie retour 18.

Le satellite 10 comporte une antenne de réception multifaisceaux 20, configurée pour former un ensemble 24 d'au moins deux spots de réception adjacents 26, 28, 30, 32, 34, 36, 38 d'une couverture terrestre 40.

Suivant la Figure 1 et à titre d'exemple illustratif, l'ensemble 24 des spots de réception de la couverture terrestre 40 comporte 7 spots de réception 26, 28, 30, 32, 34, 36, 38 avec un spot de réception central 26 entouré par 6 spots de réception 28, 30,32, 34, 36, 38 immédiatement voisins, cette disposition définissant un motif hexagonal classique de pavage d'une couverture satellite pour des spots de forme sensiblement circulaires.

Les terminaux émetteurs 14, 16 de l'ensemble 12, deux d'entre eux seulement étant représentés sur la Figure 1 par souci de simplification, sont répartis sur l'ensemble 24 des spots de réception, ici le spot central 26 et le spot voisin 28, chaque terminal comprenant un moyen de positionnement géographique ou de géo-localisation 44 et un moyen d'émission 46 d'une ressource de transmission voie retour allouée.

Le planificateur et allocateur de ressources de transmission voie retour 18, réalisé sous la forme d'un ou plusieurs calculateurs électroniques 52, est configuré pour attribuer à un terminal émetteur lorsqu'il le demande, par exemple le terminal émetteur 14, une ressource de transmission voie retour, de manière générale une sous-bande de fréquence, en fonction de la position géographique du terminal émetteur, déterminée par le moyen de positionnement géographique 44, et d'un plan d'allocation de ressources de transmission qui réutilise complètement ou de manière fractionnaire les fréquences de la bande totale allouée BT à la voie retour 4.

Ici, le planificateur et allocateur de ressources de transmission voie retour 18 est centralisé dans une station 54 de contrôle des ressources et de leur planification.

En variante, le planificateur et allocateur de ressources de transmission voie retour est réparti sur l'ensemble des terminaux et/ou d'une ou plusieurs stations auxiliaires.

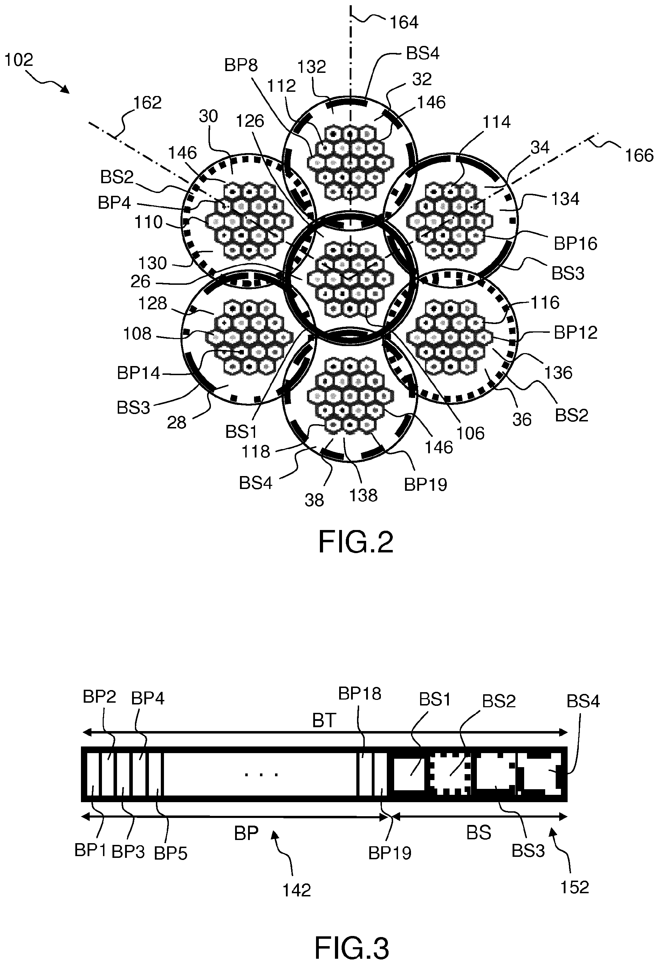

Suivant la Figure 2 et un premier mode de réalisation d'un plan de réutilisation des fréquences 102 de la voie retour selon l'invention, une vue partielle de ce plan 102 est représentée au travers de l'ensemble 24 des spots de réception 26, 28, 30, 32, 34, 36, 38 décrits sur la Figure 1.

Suivant le plan 102, chaque spot de réception 26, 28, 30, 32, 34, 36 est constitué respectivement d'une zone interne centrale 106, 108, 110, 112, 114, 116, 118 et d'une zone périphérique 126, 128, 130, 132, 134, 136, 138 entourant la zone interne centrale correspondante.

Suivant le plan 102 d'allocation des ressources de transmission décrit dans les Figures 2 et 3, une même bande principale BP de fréquences, ici d'un seul tenant et formant une partie de la bande totale BT, est allouée en totalité à chaque zone interne centrale 106, 108, 110, 112, 114, 116, 118.

Suivant la Figure 3, la bande principale BP se décompose en un premier bouquet 142 d'un premier nombre entier n1, ici égal à 19, de sous-bandes principales d'un seul tenant chacune et adjacentes deux à deux, numérotées successivement de BP1 à BP19.

Suivant la Figure 2, la zone interne centrale 106, 108, 110, 112, 114, 116, 118 de chaque spot de réception 26, 28, 30, 32, 34, 36, 38 se décompose, ici à un même facteur d'échelle K représentatif de la taille de la zone interne du spot de réception, en un même motif cellulaire 146 régulier, compact, d'un seul tenant et recouvrant la totalité de la zone centrale, de 19 cellules hexagonales dans lesquelles sont réparties unitairement les différentes sous-bandes principales du premier bouquet 142. Ainsi le nombre de cellules du motif cellulaire 146 est égal au nombre de sous-bandes principales du premier bouquet et une correspondance biunivoque existe entre les sous-bandes principales et les cellules hexagonales du motif cellulaire 146. Par exemple, en numérotant les cellules de 1 à 19 et en parcourant les rangées du motif de haut en bas et les cellules de gauche à droite pour chaque rangées, à chaque cellule est attribuée ici la sous-bande principale dont le rang dans la bande principale est égal au numéro de la cellule. Ainsi sont attribuées respectivement aux trois cellules de la première rangée du haut du motif 146 numérotées 1, 2, 3 de gauche à droite de la première rangée sur la figure 2, les sous-bandes principales BP1, BP2, BP3. De même, sont attribués respectivement aux quatre cellules de la deuxième rangée en partant du haut du motif, numérotées 4, 5, 6, 7 de gauche à droite de la deuxième rangée sur la Figure 2, les sous-bandes principales BP4, BP5, BP6 et BP7, et ainsi de suite pour les cinq cellules numérotées 8, 9, 10, 11, 12 de la troisième rangée, les quatre cellules numérotées 13, 14, 15, 16 de la quatrième rangée, et les trois cellules numérotées 17, 18, 19 de la cinquième et dernière rangée.

Il est à remarquer qu'une fonction de correspondance entre les numéros des cellules et les numéros de rang des sous-bandes principales, dérivée de la fonction de correspondance, décrite ci-dessus en permutant les numéros des cellules et/ou les numéros des rangs des sous-bandes principales, définit un autre motif qui convient à l'invention.

Suivant le plan 102 d'allocation des ressources de transmission de la Figure 3, la bande principale BP de fréquences forme ici une partie de la bande totale BT de réception voie retour. Les fréquences de la bande totale BT qui ne font pas partie de la bande principale BP forment une bande secondaire BS, ici d'un seul tenant, qui se décompose en un deuxième bouquet 152, d'un nombre entier n2, ici égal à 4, de sous-bandes secondaires d'un seul tenant chacune et adjacentes deux à deux, numérotées successivement BS1, BS2, BS3, et BS4.

Suivant la Figure 2, les sous-bandes BS1, BS2, BS3 et BS4 sont réparties sur l'ensemble des zones périphériques 126, 128, 130, 132, 134, 136, 138 des spots de réception 26, 28, 30, 32, 34, 36, 38 suivant un schéma multicolore, ici à quatre couleurs de sous-bandes secondaires. La sous-bande secondaire BS 1 est affectée au spot central de réception 26 ; la sous-bande secondaire BS2 est affectée aux deux spots 30 et 36, adjacents de part et d'autre au spot central 26 et situés le long d'un premier axe 162 passant par le centre du spot central 26 et de pente négative sur la Figure 2; la sous-bande secondaire BS3 est affectée aux deux spots 32 et 38, adjacents de part et d'autre au spot central 26 et situés le long d'un deuxième axe vertical 164 traversant le centre du spot central 26 ; la sous-bande secondaire BS4 est affectée aux deux spots 34 et 28, adjacents de part et d'autre au spot central 26 et situés le long d'un troisième axe 166 passant par le centre du spot central 26 et de pente opposée à la pente du premier axe 162. Les spots de réception 26, 28, 30, 32, associés à leurs couleurs de sous-bandes secondaires, forment une maille de coloriage de l'ensemble des zones périphériques des spots de réception pour le schéma à quatre couleurs de sous-bandes secondaires décrit ci-dessus.

En variante, la bande principale BP de fréquences forme la totalité de la bande totale BT qui est d'un seul tenant, et cette bande est allouée dans sa totalité à chaque zone interne centrale. Dans ce cas aucun coloriage de sous-bande secondaire n'est utilisé dans les zones périphériques des spots de réception.

De manière générale, une même bande principale de fréquences d'un seul tenant ou en plusieurs morceaux, formant une partie ou la totalité de la bande totale, est allouée en totalité à chaque zone interne centrale.

De manière générale, la bande principale se décompose en un premier bouquet d'un premier nombre entier n1, supérieur ou égal à 2, de sous-bandes principales d'un seul tenant chacune, adjacentes ou séparées.

De manière générale, la zone interne centrale de chaque spot de réception se décompose, à un facteur d'échelle près représentatif de la taille de la zone interne, en un même motif cellulaire régulier de cellules dans lesquelles sont réparties unitairement les différentes sous-bandes principales du premier bouquet, le nombre de cellules du motif cellulaire étant égal au premier nombre n1 de sous-bandes principales du premier bouquet.

De manière préférée, le motif cellulaire est un motif de cellules de même taille et de forme triangulaire, carré ou hexagonale et/ou le nombre de cellules est compris entre 2 et 19.

De manière générale, suivant le plan d'allocation des ressources de transmission, lorsque la bande principale de fréquences forme une partie de la bande totale, les fréquences de la bande totale qui ne font pas partie de la sous-bande principale forment une bande secondaire d'un seul tenant ou en plusieurs morceaux qui se décompose en un deuxième bouquet d'un nombre entier n2, supérieur ou égal à 3, de sous-bandes secondaires d'un seul tenant chacune, séparées ou adjacentes, réparties sur l'ensemble des zones périphériques des spots de réception suivant un schéma multicolore à n2 couleurs de sous-bandes secondaires.

De manière préférée, le deuxième nombre n2 de sous-bandes secondaires est un nombre entier compris dans l'ensemble des nombre 3, 4, 7 et 12.

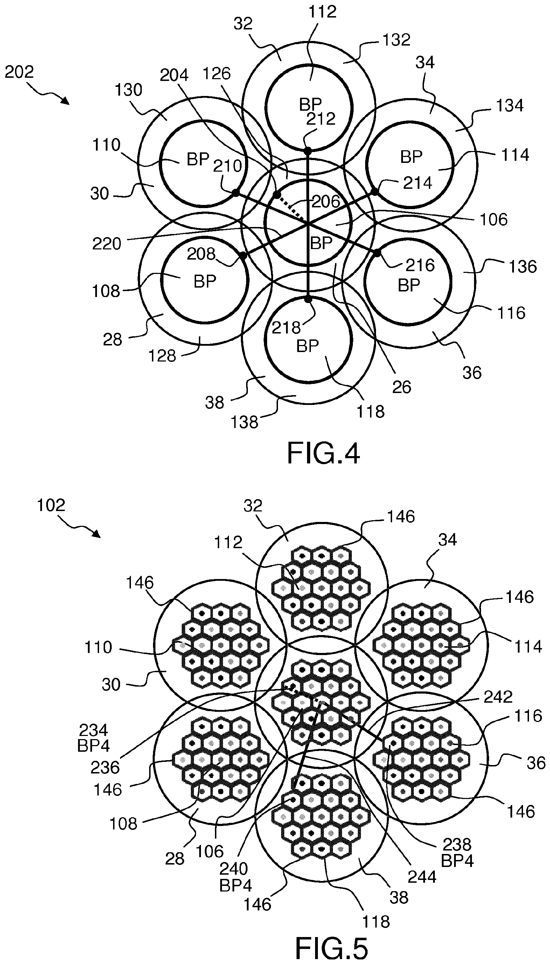

Suivant la Figure 4, une configuration de référence d'un plan d'allocation de ressources 202 faisant partie de l'état de la technique est illustrée afin de mettre en évidence l'amélioration de la capacité de transmission apportée au système par l'utilisation du plan de réutilisation de fréquences 102 de la Figure 2.

Le plan d'allocation 202 de ressources de transmission servant de référence diffère seulement du plan 102 de réutilisation de fréquences de la Figure 2 par l'absence d'un motif cellulaire à au moins deux cellules, à fortiori 19 cellules d'allocation fragmentée de la bande principale. Il est à remarquer que le schéma à quatre couleurs de sous-bandes secondaires est utilisé dans le plan d'allocation 202 de référence, mais n'est pas représenté ici par souci de lisibilité de la Figure 4.

Suivant le plan d'allocation 202 de référence dépourvu de sectorisation cellulaire, n'importe quelle fréquence ou sous-bande de fréquences de la bande principale BP peut être utilisé à n'importe quelle endroit dans la zone interne centrale de chaque spot de réception, en particulier peut être utilisé à n'importe quelle endroit de la bordure intérieure de la zone interne centrale de chaque spot de réception, à l'inverse du plan d'allocation 102 de l'invention selon lequel l'utilisation d'une sous-bande principale est contrainte par le motif cellulaire d'allocation des sous-bandes principales implémenté dans chaque zone interne centrale des spots de réception.

Suivant la Figure 4, le pire cas de rapport de C/I pour le plan d'allocation 202 est observé lorsque le signal utile souhaité est émis par exemple d'un premier terminal situé en bord de la zone interne du spot de réception central et à l'extrémité 204 d'un premier segment de directivité 206 sur la Figure 4 et le signal d'interférence résulte de la contribution de 6 sources d'interférence prépondérantes, constituées par six terminaux émettant à la même fréquence, et situées sur les bords des zones centrales des spots de réception adjacents aux extrémités 208, 210, 212, 214, 216, 218 de six segments de directivités formant une étoile 220 à six branches. Ce pire cas de C/I est le (C/I)_{ref1} de référence que l'on cherche à améliorer.

Suivant la Figure 5, le plan de réutilisation de fréquences 102 selon le premier mode de réalisation de l'invention est représenté à l'identique de la Figure 2 à l'exception du schéma à quatre couleurs des sous-bandes secondaires qui n'est pas représenté ici par souci de lisibilité de la Figure 5.

Suivant le plan de réutilisation de fréquences 102, l'utilisation d'une sous-bande principale BP1, BP2, ..., BP19 quelconque de la bande principale BP est contrainte par le motif cellulaire 146 d'allocation des sous-bandes principales implémenté dans chaque zone interne centrale des spots de réception en étant limitée à une unique cellule par spot de réception.

Suivant la Figure 5, le pire cas de rapport de C/I pour le plan de réutilisation de fréquences 102 selon l'invention est observé lorsque le signal utile souhaité est émis par exemple d'un deuxième terminal situé en bord de la zone interne 106 du spot de réception central 26 et à l'extrémité 234 d'un premier segment de directivité 236 et le signal d'interférence résulte dans sa part la plus importante de la contribution de deux sources d'interférence prépondérantes constituées par deux terminaux, émettant à la même fréquence, ici la sous-bande BP4, et situés sur les bords des zones centrales 116, 118 des deux spots de réception adjacents 36, 38 aux extrémités 238, 240 de deux segments de directivité 242, 244. Ce pire cas de C/I est plus grand de 5 dB que le C/I pire cas de référence (C/I)_{ref1}, en raison d'une diminution du nombre des sources d'interférence contribuant chacune au phénomène d'interférence pour une part individuelle du même ordre de grandeur. En effet, dans la configuration de la Figure 5 le nombre de sources d'interférences prépondérantes et du même ordre de grandeur est égal à deux tandis que dans la configuration de référence de la Figure 4 le nombre de sources d'interférences prépondérantes et de même ordre de grandeur est égal à six.

Ainsi, la performance en C/I a été améliorée de manière significative dans la zone centrale de chaque spot de réception par une planification des ressources de fréquences fondée sur un critère géographique de position des terminaux et la structuration de chaque zone interne centrale en un motif cellulaire de répartition des sous-bandes principales, formant ainsi dans chaque zone centrale un bouquet de sous-bandes principales. Cette planification et réutilisation des fréquences permet d'obtenir un gain de C/I et d'agrandir en conséquence la zone interne centrale de chaque spot de réception sur un critère de C/I.

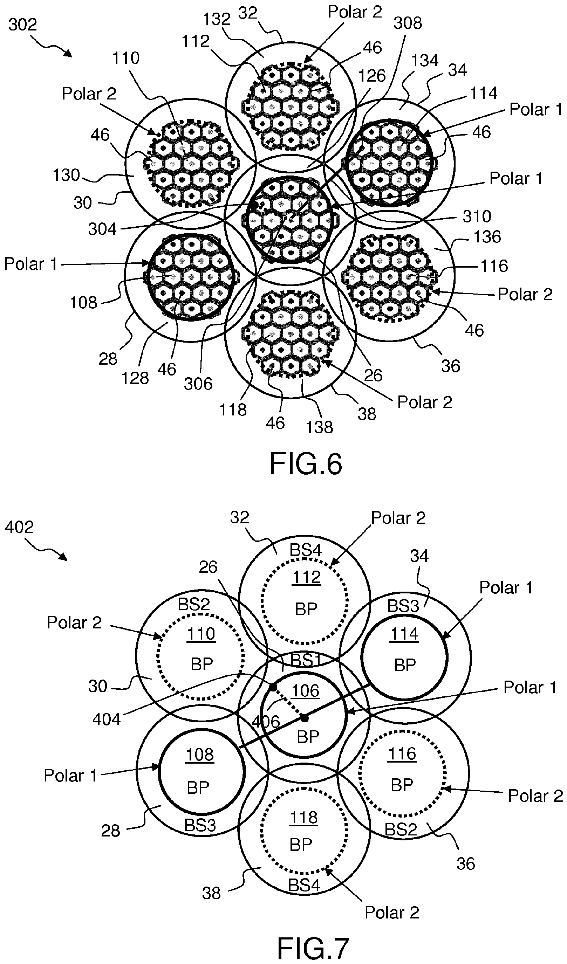

Suivant la Figure 6 et un deuxième mode de réalisation d'un plan de réutilisation de fréquences de la voie retour 302 selon l'invention, une vue partielle de ce plan 302 d'allocation de ressources fréquentielles de voie retour est illustrée au travers du même ensemble 24 des spots de réception 26, 28, 30,32, 34, 36, 38 décrits sur les Figures 1 et 2.

Le plan de réutilisation de fréquences de la voie retour 302 est fondé sur le plan de réutilisation102 de la première forme de réalisation décrit dans les Figures 2, 3 et 5, et en diffère seulement par l'ajout d'une dimension supplémentaire qui est celle des états de polarisation.

Suivant la Figure 6, le plan de réutilisation de fréquences 102 selon le premier mode de réalisation de l'invention est représenté à l'identique de la Figure 2 à l'exception du schéma à quatre couleurs des sous-bandes secondaires qui n'est pas représenté par souci de lisibilité de la Figure 6.

Suivant le plan d'allocation de ressources de transmission 302, un troisième nombre entier n3, ici égal à 2, de polarisations différentes, ici la polarisation circulaire gauche et la polarisation circulaire droite, désignées respectivement par Polar 1 et Polar 2 sur la Figure 6, et formant un ensemble de deux états de polarisation distincts, sont réparties sur l'ensemble des spots de réception 26, 28, 30, 32, 36, 38 et se superposent suivant un schéma de répartition bicolore de polarisations à la carte colorée d'allocation géographique et de réutilisation des sous-bandes de fréquences, principales et secondaires. Dans le spot de réception central 26, la première polarisation Polar 1 est combinée à l'utilisation de l'ensemble des sous-bandes principales BP1 à BP19 réparties dans le motif cellulaire 46 et de la sous-bande secondaire BS1 dans la zone périphérique 126. Dans le spot de réception 28, la première polarisation Polar 1 est combinée à l'utilisation de l'ensemble des sous-bandes principales BP1 à BP19 réparties dans le motif cellulaire 46 et de la sous-bande secondaire BS3 dans la zone périphérique 128. Dans le spot de réception 34, la première polarisation Polar 1 est combinée à l'utilisation de l'ensemble des sous-bandes principales BP1 à BP19 réparties dans le motif cellulaire 146 et de la sous-bande secondaire BS3 dans la zone périphérique 134. Dans le spot de réception 30, la deuxième polarisation Polar 2 est combinée à l'utilisation de l'ensemble des sous-bandes principales BP1 à BP19 réparties dans le motif cellulaire 46 et de la sous-bande secondaire BS2 dans la zone périphérique 130. Dans le spot de réception 32, la deuxième polarisation Polar 2 est combinée à l'utilisation de l'ensemble des sous-bandes principales BP1 à BP19 réparties dans le motif cellulaire 46 et de la sous-bande secondaire BS4 dans la zone périphérique 132. Dans le spot de réception 36, la deuxième polarisation Polar 2 est combinée à l'utilisation de l'ensemble des sous-bandes principales BP1 à BP19 réparties dans le motif cellulaire 46 et de la sous-bande secondaire BS2 dans la zone périphérique 136. Dans le spot de réception 38, la deuxième polarisation Polar 2 est combinée à l'utilisation de l'ensemble des sous-bandes principales BP1 à BP19 réparties dans le motif cellulaire 46 et de la sous-bande secondaire BS2 dans la zone périphérique 138. Il est à remarquer que la répartition des deux polarisations sur l'ensemble des spots de réception décrit un motif de lignes diagonales de polarisation sur la Figure 6 alternant l'état de polarisation.

Pour mettre en oeuvre le plan 302, le planificateur et allocateur de ressources de transmission voie retour 18, décrit à la Figure 1, est configuré pour attribuer à un terminal émetteur lorsqu'il le demande une ressource de transmission voie retour en termes d'une sous-bande de fréquence et d'une polarisation en fonction de la position géographique du terminal émetteur et du plan d'allocation de ressources de transmission 302.

Suivant la Figure 6, le pire cas de rapport de C/I pour le plan de réutilisation de fréquences 302 selon l'invention est observé lorsque le signal utile souhaité est émis par exemple d'un troisième terminal, situé en bord de la zone interne 106 du spot de réception central 26 dans la cellule de numéro 4 du motif cellulaire et à l'extrémité 304 d'un premier segment de directivité 306 et le signal d'interférence résulte dans sa part la plus importante de la contribution d'une seule source d'interférence constituée par un terminal émettant à la même fréquence, ici la sous-bande BP4, et situé sur le bord de la zone centrale 114 du spot de réception adjacent 34 dans la cellule 4 du motif cellulaire à l'extrémité 308 d'un segment de directivité 310. Ce pire cas de C/I est plus grand de 8 dB que le C/I pire cas de première référence (C/I)_{ref1}, en raison d'une diminution du nombre des sources d'interférence contribuant chacune au phénomène d'interférence avec le même ordre de grandeur. Dans la configuration de la Figure 6, le nombre de sources d'interférences prépondérantes et du même ordre de grandeur est égal à un tandis que dans la configuration de première référence de la Figure 4 le nombre de sources d'interférences prépondérantes et du même ordre de grandeur est égal à six.

Ainsi, la configuration 302 de la Figure 6 améliore davantage la performance en C/I au sein de la zone interne centrale de chaque spot de réception que ne le fait la configuration 102 de la Figure 5 grâce à une planification de ressources de transmission conjointe en termes de fréquences et d'états de polarisation, fondée sur un critère géographique de position des terminaux, et la structuration de chaque zone interne centrale en un motif cellulaire de répartition de sous-bandes principales qui forment dans chaque zone centrale un bouquet de sous-bandes principales réparties, de la création d'une dimension supplémentaire en termes d'une multiplicité d'états de polarisation et de la réutilisation géographique de ces différents états de polarisation.

Cette planification et réutilisation des fréquences permet ainsi d'obtenir un gain de C/I et d'agrandir en conséquence la zone interne centrale de chaque spot de réception sur un critère de C/I.

De manière générale, le planificateur et allocateur de ressources de transmission voie retour est configuré pour attribuer à un terminal émetteur lorsqu'il le demande une ressource de transmission voie retour en termes d'une sous-bande de fréquence et d'une polarisation en fonction de la position géographique du terminal émetteur et d'un plan d'allocation de ressources de transmission, suivant lequel un troisième nombre entier n3, supérieur ou égal à 2, de polarisations différentes formant un ensemble d'états de polarisation, sont réparties sur l'ensemble des spots de réception et se superposent suivant un schéma de répartition multicolore à n3 couleurs de polarisation à la carte colorée d'allocation géographique des sous-bandes de fréquences.

Suivant la Figure 7, une deuxième configuration de référence d'un plan d'allocation de ressources de transmission 402 faisant partie de l'état de la technique améliore les performances en termes de capacité de transmission de la première configuration de référence du plan d'allocation de ressources de transmission 202 faisant partie de l'état de la technique décrit à la Figure 4, et sert de deuxième référence pour évaluer l'amélioration de la capacité de transmission du système au travers du C/I apportée par le plan de réutilisation de fréquences 302 de la Figure 6 suivant un deuxième mode de réalisation de l'invention.

Le deuxième plan d'allocation 402 de ressources de transmission servant de deuxième référence diffère du deuxième plan 302 de réutilisation de fréquences de la Figure 6 selon l'invention par l'absence d'un motif cellulaire à au moins deux cellules, à fortiori 19 cellules, d'allocation fragmentée de la bande principale. Il est à remarquer que le schéma à quatre couleurs de sous-bandes secondaires est utilisé dans le deuxième plan d'allocation 402 servant de deuxième référence, mais n'est pas représenté ici par souci de lisibilité de la Figure 7.

Suivant le deuxième plan d'allocation 402 de deuxième référence, dépourvu de sectorisation cellulaire, n'importe quelle fréquence ou sous-bande de fréquences de la bande principale BP peut être utilisée à n'importe quelle endroit dans la zone interne centrale de chaque spot de réception, en particulier peut être utilisée à n'importe quelle endroit de la bordure intérieure de la zone interne centrale de chaque spot de réception, à l'inverse du plan d'allocation 302 selon l'invention dans lequel l'utilisation d'une sous-bande principale est contrainte par le motif cellulaire 146 d'allocation des sous-bande principales, implémenté dans chaque zone interne centrale des spots de réception.

Suivant la Figure 7, le pire cas de rapport de C/I pour le plan d'allocation 402 de deuxième référence est observé lorsque le signal utile souhaité est émis par exemple d'un quatrième terminal, situé en bord de la zone interne du spot de réception central et à une extrémité 404 d'un premier segment de directivité 406 sur la Figure 7, et le signal d'interférence résulte de la contribution de deux sources d'interférence prépondérantes et de même ordre de grandeur, constituées par deux terminaux, émettant à la même fréquence et dans la même polarisation que le quatrième terminal, ici la première polarisation Polar 1, et situés sur les bords des zones internes centrales 108, 114, des spots de réception adjacents 28, 34, aux extrémités 408, 410 de deux segments de directivité 412, 414. Ce pire cas de C/I est le C/I de deuxième référence, (C/I)_{ref2}, qui est amélioré par la mise en oeuvre du deuxième plan de réutilisation de fréquences 302 de la Figure 6, qui combine la réutilisation de fréquences par répartition de sous-bandes principales dans un même motif cellulaire de zone interne centrale et la réutilisation d'états de polarisation sur les spots de réception suivant un schéma multicolore.

Le pire cas de C/I du deuxième plan de réutilisation de fréquences 302 de la Figure 6 est plus grand de 3 dB par rapport au C/I du pire cas, (C/I)_{ref2}, du plan d'allocation 402 de deuxième référence en raison de la structuration de chaque zone interne en un motif cellulaire, et plus grand de 8 dB par rapport au C/I du pire cas, (C/I)_{ref1}, du premier plan d'allocation 202 de première référence, en raison des effets conjoints de la structuration de chaque zone interne en un motif cellulaire et de la réutilisation de multiples états de polarisation.

Ainsi, la performance en C/I a été améliorée une nouvelle fois de manière significative dans la zone centrale de chaque spot de réception par une planification des ressources de fréquences sur un critère géographique de position des terminaux et la structuration de chaque zone centrale en un motif cellulaire de répartition de sous-bandes, formant ainsi dans chaque zone centrale un bouquet de sous-bandes. Cette planification et réutilisation des fréquences permet d'obtenir un gain de C/I et d'agrandir en conséquence la zone centrale de chaque spot de réception sur un critère de C/I.

Il est à remarquer que dans tous les modes de réalisation de l'invention décrit ci-dessus, l'antenne de réception est configurée pour former des spots de réception illuminés chacun suivant une loi gaussienne et ayant chacun en son bord un roll off supérieur ou égal à 7 dB. Cela provient du fait qu'un même réflecteur est utilisé pour la voie aller dans laquelle le satellite émet vers le sol et pour la voie dans laquelle le satellite reçoit les signaux émis depuis le sol. Ce réflecteur est adapté en voie aller à la fréquence d'émission pour présenter un roll off de 3 dB en bord de spot d'émission et se trouve surdimensionné en voie retour en raison d'une fréquence de réception plus élevée que la fréquence d'émission. Pa exemple en bande Ka, la fréquence d'émission est de l'ordre de 20 GHz tandis que la fréquence de réception est de l'ordre de 30 GHz. Ici et à l'inverse de ce qui se fait classiquement, la loi d'illumination en voie retour n'est pas travaillée afin de retrouver un roll off de 3 dB en bord de spot de réception. Il en résulte un roll off supérieur ou égal à 7 dB en bord de spot de réception.

Dans le cas d'un contrôle insuffisant de l'attitude de la plateforme du satellite pouvant causer un dépointage rédhibitoire de l'antenne de réception du satellite, un système automatique de correction du dépointage de l'antenne de réception pourra être utilisé.

Le moyen de positionnement géographique de chaque terminal émetteur est suffisamment précis pour déterminer dans quel spot de réception il se trouve, s'il se trouve dans une zone interne ou dans un zone périphérique du spot, et lorsqu'il se trouve dans une zone interne dans quel cellule il se trouve.

Des variantes de schéma d'allocation sont possibles en fonction de la variabilité locale du trafic, traduite en densité locale de trafic, et de la dynamique temporelle du trafic sur la couverture. Par exemple, dans un premier cas, la taille de la zone interne centrale, représentative d'un facteur d'échelle, varie en fonction du spot de réception et du temps. Dans un deuxième cas, la taille de la zone centrale varie en fonction du spot de réception et est indépendante du temps. Dans un troisième cas, la taille de la zone centrale est constante, indépendamment du spot de réception et du temps.

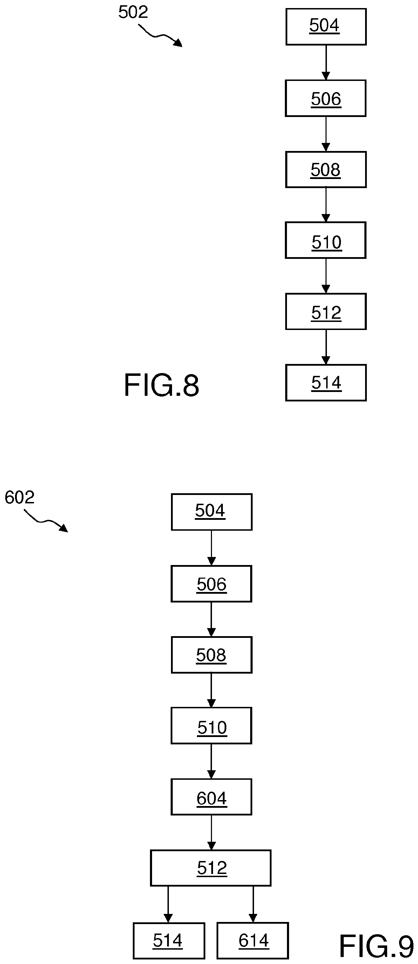

Suivant la Figure 8 et un premier mode de réalisation de l'invention, un procédé 502 de réutilisation complète ou fractionnaire de fréquences d'une bande totale BT allouée à une voie retour est mis en oeuvre dans un système de radiocommunications satellitaire tel que celui décrit dans la Figure 1.

Le système de radiocommunications satellitaire comprend un satellite ayant une antenne de réception multifaisceaux, configurée pour former un ensemble d'au moins deux spots de réception adjacents d'une couverture terrestre, et un ensemble de terminaux émetteurs répartis sur l'ensemble des spots, chaque terminal comprenant un moyen de positionnement géographique.

Le procédé de réutilisation de fréquences 502 comprend un ensemble d'étapes exécutées successivement.

Dans une première étape 504, chaque spot de réception est décomposé géographiquement en une zone interne centrale et une zone périphérique entourant la zone interne centrale.

Puis, dans une deuxième étape 506, une bande principale de fréquences est attribuée aux zones internes de l'ensemble des spots de réception. La bande principale de fréquences, d'un seul tenant ou en plusieurs morceaux, forme une partie ou la totalité de la bande totale, et elle est partagée en commun par lesdites zones internes.

Ensuite, dans une troisième étape 508, la bande principale est décomposée en un premier bouquet d'un premier nombre n1 supérieur ou égal à 2 de sous-bandes principales d'un seul tenant chacune, adjacentes ou séparées.

Dans une quatrième étape 510 successive, la zone interne centrale de chaque spot de réception est décomposée, à un facteur d'échelle près représentatif de la taille de la zone interne, en un même motif cellulaire régulier de cellules dans lesquelles sont réparties unitairement les différentes sous-bandes principales du premier bouquet, le nombre de cellules du motif cellulaire étant égal au premier nombre n1 de sous-bandes principales du premier bouquet.

Ensuite, dans une cinquième étape 512, pour chaque terminal de la zone de la couverture qui souhaite disposer d'une ressource de transmission, il est déterminé dans quel spot le terminal se trouve, et s'il se trouve dans une zone interne ou une dans une zone périphérique, et dans le cas où le terminal se trouve dans une zone interne déterminer dans quelle cellule il se trouve.

Ensuite dans une sixième étape 514, la sous-bande principale qui a été attribuée lors de la quatrième étape 510 à la cellule du spot de réception dans lequel le terminal se trouve est allouée au terminal émetteur.

Suivant la Figure 9 et un deuxième mode de réalisation de l'invention, un procédé 602 de réutilisation fractionnaire de fréquences d'une bande totale allouée à une voie retour est une variante du premier mode de réalisation 502 du procédé de réutilisation de fréquences de la Figure 8 dans laquelle une septième étape 604 a été ajoutée entre la quatrième étape 510 et la cinquième 512, et une huitième étape 614 été ajoutée après la cinquième étape 512.

Dans la septième étape 604, étant supposé que la bande principale de fréquences BP forme une partie de la bande totale BT, l'ensemble BS des fréquences de la bande totale qui ne font pas partie de la bande principale est décomposé en un deuxième bouquet d'un nombre n2 supérieur ou égal à 3 de sous-bandes secondaires d'un seul tenant, séparées ou adjacentes, réparties sur l'ensemble des zones périphériques suivant un schéma multicolore à n2 couleurs.

Dans la huitième étape 614, lorsqu'il a été déterminé au préalable dans la cinquième étape 512 que le terminal se trouve dans une zone périphérique d'un spot de réception, la sous-bande secondaire qui a été attribuée à la zone périphérique du spot de réception dans lequel le terminal se trouve lors de la septième étape 604 est allouée au terminal émetteur.

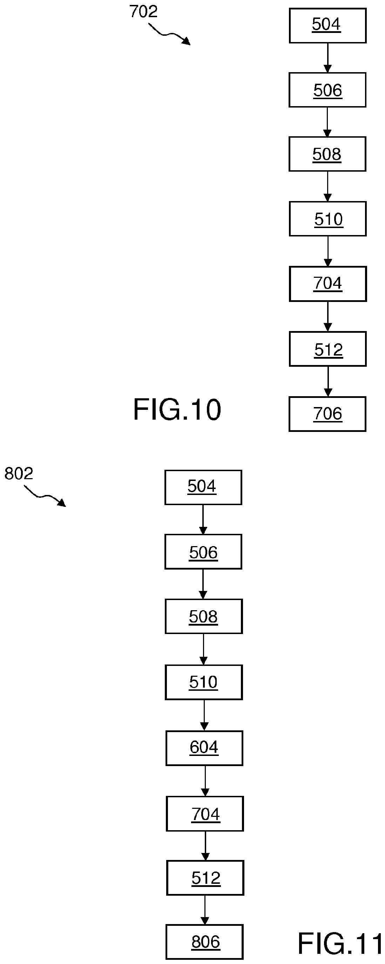

Suivant la Figure 10 et un troisième mode de réalisation de l'invention, un procédé 702 de réutilisation complète ou fractionnaire de fréquences d'une bande totale allouée à une voie retour est une variante du premier mode de réalisation 502 du procédé de réutilisation décrit dans la Figure 8 dans laquelle le satellite est configuré pour détecter également un troisième nombre entier n3, supérieur ou égal à 2, de polarisations formant un ensemble d'états de polarisation. De plus, dans cette variante les terminaux émetteurs sont configurés pour émettre au choix et de manière commandée dans l'une des n3 polarisation.

Suivant le procédé 702 de réutilisation de fréquences, une neuvième étape 704 a été ajouté entre l'étape 510 et l'étape 512, et la sixième étape 514 a été remplacée par une dixième étape 706.

Dans la neuvième étape 704, les états polarisation au nombre de n3 sont répartis sur l'ensemble des spots de réception suivant un schéma de répartition multicolore à n3 couleurs de polarisations en étant superposés à la carte d'allocation géographique des sous-bandes principales.

La dixième étape 706 est la sixième étape 514 dans laquelle, pour chaque terminal qui souhaite disposer d'une ressource de transmission formé d'une sous-bande de fréquence et d'une polarisation, après avoir déterminé dans quel spot de réception le terminal d'émission de trouve, la polarisation qui a été attribuée au spot de réception dans lequel le terminal se trouve est allouée au terminal, en plus de la sous-bande principale qui lui a été attribuée dans l'étape 510.

De manière particulière, le troisième nombre entier n3 est égal à 2, une première polarisation étant la polarisation circulaire droite et la deuxième polarisation étant la polarisation circulaire gauche.

Suivant la Figure 11 et une variante du procédé 702 de la Figure 10, un quatrième mode de réalisation d'un procédé de réutilisation de fréquence 810, comprenant les mêmes étapes 504, 506, 508, 510, 704, 512, 706 du procédé 702, comporte en outre l'étape 604 du procédé 602 de la Figure 9 interposée entre l'étape 510 et l'étape 704, et une nouvelle étape de sortie 806 de la cinquième étape 512 en remplacement de la dixième étape 706. Dans cette nouvelle étape 806, pour chaque terminal qui souhaite disposer d'une ressource de transmission formée d'un sous-bande de fréquence et d'un état de polarisation, après avoir déterminé dans quel spot de réception le terminal d'émission de trouve et dans quelle zone, la polarisation qui a été attribuée au spot de réception dans lequel le terminal se trouve est allouée au terminal, en plus de la sous-bande principale ou secondaire qui lui a été attribuée dans l'étape 510 ou l'étape 604.

Le système de radiocommunications satellitaire et le procédé de réutilisation de fréquences sont configurés pour une réception de la voie retour par le satellite dans une bande comprise dans l'ensemble des bandes C, X, Ku, Ka, L, S, Q et V.

Une planification statique du motif cellulaire correspond à un optimum pour un système à charge maximum.

Lorsque les systèmes ne sont pas chargés à 100%, une planification dynamique sur un critère de C/I peut être envisagée, nonobstant qu'un optimum à un instant donné n'est plus forcément cohérent avec l'instant suivant et entraîne une complexité dans la gestion de la planification.
Cette limitation de la zone centrale empêche l'augmentation de la surface de la zone centrale et de l'augmentation de capacité amenée par les architectures de réutilisation de fréquence FFR.

Les procédés de réutilisation de fréquences tels que décrits ci-dessus permettent d'augmenter la capacité de transmission d'un satellite mais également la densité de capacité, c'est-à-dire le débit adressable par unité de surface.

## Revendications

1. Système de radiocommunications satellitaire multifaisceaux large bande configuré pour une réutilisation complète ou fractionnaire de fréquences d'une bande totale BT allouée à une voie retour (4), comprenant
.- un satellite (10) ayant une antenne de réception multifaisceaux (20) configurée pour former un ensemble (24) d'au moins deux spots de réception adjacents (26, 28, 30, 32, 34, 36, 38) d'une couverture terrestre (40); et
.- un ensemble de terminaux émetteurs (14, 16) répartis sur l'ensemble des spots, chaque terminal (14, 16) comprenant un moyen de positionnement géographique (44) et un moyen d'émission (46) d'une ressource de transmission allouée ;
.- un planificateur et allocateur de ressources de transmission voie retour (18), réalisé sous la forme d'un ou plusieurs calculateurs électroniques (52), configuré pour attribuer à un terminal émetteur (14, 16) lorsqu'il le demande une ressource de transmission voie retour en termes d'une sous-bande de fréquence en fonction de la position géographique du terminal émetteur (14, 16) et d'un plan d'allocation de ressources de transmission (102, 302) suivant lequel,
chaque spot de réception (26, 28, 30, 32, 34, 36, 38) est constitué d'une zone interne centrale (106, 108, 110, 112, 114, 116, 118) et d'une zone périphérique (126, 128, 130, 132, 134, 136, 138) entourant la zone interne centrale; et
une même bande principale BP de fréquences d'un seul tenant ou en plusieurs morceaux, formant une partie ou la totalité de la bande totale, est allouée en totalité à chaque zone interne centrale (106, 108, 110, 112, 114, 116, 118),
**caractérisé en ce que**
suivant le plan d'allocation des ressources de transmission (102, 302), la bande principale BP se décompose en un premier bouquet (142) d'un premier nombre entier n1, supérieur ou égal à 2, de sous-bandes principales d'un seul tenant chacune, adjacentes ou séparées ; et
la zone interne centrale (106, 108, 110, 112, 114, 116, 118) de chaque spot de réception (26, 28, 30, 32, 34, 36, 38) se décompose, à un facteur d'échelle près représentatif de la taille de la zone interne centrale, en un même motif cellulaire régulier (146) de cellules dans lesquelles sont réparties unitairement les différentes sous-bandes principales du premier bouquet (142), le nombre de cellules du motif cellulaire étant égal au premier nombre n1 de sous-bandes principales du premier bouquet.

2. Système de radiocommunication satellitaire multifaisceaux selon la revendication 1, dans lequel
suivant le plan d'allocation des ressources de transmission (102, 302),
la bande principale de fréquences BP forme une partie de la bande totale ; et les fréquences de la bande totale BT qui ne font pas partie de la bande principale BP forment une bande secondaire BS d'un seul tenant ou en plusieurs morceaux qui se décompose en un deuxième bouquet (152) d'un nombre entier n2, supérieur ou égal à 3, de sous-bandes secondaires d'un seul tenant chacune, séparées ou adjacentes, réparties sur l'ensemble des zones périphériques (126, 128, 130, 132, 134, 136, 138) des spots de réception (26, 28, 30, 32, 34, 36, 38) suivant un schéma multicolore à n2 couleurs de sous-bandes secondaires.

3. Système de radiocommunication satellitaire multifaisceaux selon la revendication 2, dans lequel le deuxième nombre n2 de sous-bandes secondaires est un nombre entier compris dans l'ensemble des nombre 3, 4, 7 et 12.

4. Système de radiocommunication satellitaire multifaisceaux selon l'une quelconque des revendications 1 à 3, dans lequel,
le motif cellulaire (146) est un motif de cellules de même taille et de forme triangulaire, carré ou hexagonale et/ou,
le nombre de cellules n1 est compris entre 2 et 19.

5. Système de radiocommunication satellitaire multifaisceaux selon
l'une quelconque des revendications 1 à 4, dans lequel
Le planificateur et allocateur de ressources de transmission voie retour (18) est configuré pour attribuer à un terminal émetteur (14, 16) lorsqu'il le demande une ressource de transmission voie retour en termes d'une sous-bande de fréquence et d'une polarisation en fonction de la position géographique du terminal émetteur et du plan d'allocation de ressource (302) suivant lequel,
un troisième nombre entier n3, supérieur ou égal à 2, de polarisations différentes formant un ensemble d'états de polarisation, sont réparties sur l'ensemble des spots de réception et se superposent suivant un schéma de répartition multicolore à n3 couleurs de polarisations à la carte colorée d'allocation géographique des sous-bandes de fréquences.

6. Système de radiocommunication satellitaire multifaisceaux selon la revendication 5, dans lequel
le troisième nombre n3 de polarisations est égal à 2 et les polarisations de la paire sont la polarisation circulaire gauche et la polarisation circulaire droite ou une première polarisation suivant un premier axe et une deuxième polarisation suivant un deuxième axe orthogonal au premier axe.

7. Système de radiocommunication satellitaire multifaisceaux selon
l'une quelconque des revendications 1 à 6, dans lequel
l'antenne de réception (20) est configurée pour former des spots de réception (26, 28, 30, 32, 34, 36, 38) illuminés chacun suivant une loi gaussienne et ayant chacun en son bord un roll off supérieur ou égal à 7 dB.

8. Système de radiocommunication satellitaire multifaisceaux selon l'une quelconque des revendications 1 à 6, comprenant en outre un système automatique de correction du dépointage de l'antenne causé notamment par des variations d'attitude de la plateforme.

9. Système de radiocommunication satellitaire multifaisceaux selon
l'une quelconque des revendications 1 à 8, comprenant en outre
un ensemble de terminaux émetteurs répartis sur l'ensemble des spots, et chaque terminal comprend un moyen de positionnement géographique (44) suffisamment précis pour déterminer dans quel spot il se trouve, s'il se trouve dans une zone interne ou dans un zone périphérique, et lorsqu'il se trouve dans une zone interne dans quel cellule il se trouve.

10. Système de radiocommunication satellitaire multifaisceaux selon l'une quelconque des revendications 1 à 9, dans lequel
le planificateur et allocateur de ressources de transmission voie retour (18) est réparti sur l'ensemble des terminaux et/ou d'une ou plusieurs stations auxiliaires ou est en centralisé dans une station (54) de contrôle des ressources et de leur planification.

11. Système de radiocommunication satellitaire multifaisceaux selon l'une quelconque des revendications 1 à 10, dans lequel la taille de la zone centrale, représentative du facteur d'échelle, varie en fonction du spot de réception et du temps.

12. Système de radiocommunication satellitaire multifaisceaux selon l'une quelconque des revendications 1 à 11, configuré pour une réception de la voie retour par le satellite dans une bande comprise dans l'ensemble des bandes C, X, Ku, Ka, L, S, Q et V.

13. Procédé de réutilisation complète ou fractionnaire de fréquences d'une bande totale allouée à une voie retour dans un système de radiocommunication satellitaire multifaisceaux large bande, le système comprenant
.- un satellite ayant une antenne de réception multifaisceaux configurée pour former un ensemble d'au moins deux spots de réception adjacents d'une couverture terrestre, et
.- un ensemble de terminaux émetteurs répartis sur l'ensemble des spots, chaque terminal comprenant un moyen de positionnement géographique ;
le procédé comprenant les étapes consistant à
.- décomposer géographiquement (504) chaque spot de réception en une zone interne centrale et une zone périphérique entourant la zone interne centrale; puis
.- attribuer (506) aux zones internes de l'ensemble des spots de réception une sous-bande principale de fréquences, d'un seul tenant ou en plusieurs morceaux, formant une partie ou la totalité de la bande totale,
**caractérisé en ce que** le procédé comprend en outre les étapes consistant à
.- décomposer (508) la bande principale en un premier bouquet d'un premier nombre n1 supérieur ou égal à 2 de sous-bandes principales d'un seul tenant chacune, adjacentes ou séparées ; et
.- décomposer (510) chaque zone interne centrale d'un spot de réception, à un facteur d'échelle près représentatif de la taille de la zone interne, en un même motif cellulaire de cellules dans lesquelles sont réparties unitairement les différentes sous-bandes principales du premier bouquet, le nombre de cellules du motif cellulaire étant égal au premier nombre n1 de sous-bandes secondaires du premier bouquet.

14. Procédé de réutilisation complète ou fractionnaire de fréquences selon la revendication 13, comprenant en outre les étapes consistant à pour chaque terminal qui souhaite disposer d'une ressource de transmission,
.* déterminer (512) dans quel spot il se trouve et s'il se trouve dans une zone interne ou une dans une zone périphérique, et
* lorsque le terminal se trouve dans une zone interne déterminer dans quelle cellule il se trouve, et dans ce cas
allouer (514) au terminal la sous-bande qui a été attribuée à la cellule du spot de réception dans lequel le terminal se trouve.

15. Procédé de réutilisation de fréquence selon l'une quelconque des revendications 13 à 14 dans lequel
la bande principale de fréquences forme une partie de la bande totale ; et qui comprend en outre les étapes consistant à
.- décomposer (604) les fréquences de la bande totale qui ne font pas partie de la principale en un deuxième bouquet d'un nombre n2 supérieur ou égal à 3 de sous-bandes secondaires d'un seul tenant, séparées ou adjacentes, réparties sur l'ensemble des zones périphériques suivant un schéma multicolore à n2 couleurs de sous-bandes secondaires ; et.
.- pour chaque terminal qui souhaite disposer d'une ressource de transmission, après avoir déterminé dans quel spot il se trouve et s'il se trouve dans une zone interne ou périphérique, lorsque le terminal se trouve dans une zone périphérique, allouer (614) au terminal la sous-bande auxiliaire qui a été attribuée à la zone périphérique du spot de réception dans lequel le terminal se trouve.

16. Procédé de réutilisation de fréquence selon l'une quelconque des revendications 13 à 15, comprenant en outre les étapes consistant à
.- répartir (704) sur l'ensemble des spots de réception un troisième nombre entier n3, supérieur ou égal à 2, de polarisations formant un ensemble d'états de polarisation, en superposant à la carte d'allocation géographique des sous-bandes suivant un schéma de répartition multicolore à n3 couleurs de polarisation ; et
.- pour chaque terminal qui souhaite disposer d'une ressource de transmission formé d'un sous-bande de fréquence et d'une polarisation, après avoir déterminé dans quel spot de réception il se trouve, allouer (706) au terminal la polarisation qui a été attribuée au spot de réception dans lequel le terminal se trouve, en plus de la sous-bande qui lui a été attribué dans l'étape (510) ou l'étape (604).

17. Procédé de réutilisation de fréquence selon l'une quelconque des revendications 13 à 16, dans lequel la taille de la zone centrale varie en fonction du spot et du temps.

## Patentansprüche

1. Breitband-Mehrstrahl-Satellitenfunkkommunikationssystem, konfiguriert zur vollständigen oder teilweisen Wiederverwendung von Frequenzen eines einem Rückkanal (4) zugeordneten Gesamtbandes BT, das Folgendes umfasst:
- einen Satelliten (10) mit einer Mehrstrahl-Empfangsantenne (20), konfiguriert zum Bilden eines Satzes (24) von wenigstens zwei benachbarten Empfangsspots (26, 28, 30, 32, 34, 36, 38) einer terrestrischen Versorgung (40); und
- einen Satz von Senderendgeräten (14,16), die über alle Spots verteilt sind, wobei jedes Endgerät (14, 16) ein Mittel zur geographischen Positionierung (44) und ein Mittel (46) zum Senden einer zugeordneten Senderessource umfasst;
- einen Rückkanalsenderessourcenplaner und -zuordner (18), der in Form von einem oder mehreren elektronischen Rechnern (52) produziert wird, konfiguriert zum Zuordnen einer Rückkanalsenderessource zu einem Senderendgerät (14, 16), wenn davon angefordert, im Hinblick auf ein Frequenzteilband in Abhängigkeit von der geographischen Position des Senderendgeräts (14, 16) und einem Senderessourcenzuordnungsplan (102, 302), gemäß dem
jeder Empfangsspot (26, 28, 30, 32, 34, 36, 38) aus einer zentralen internen Zone (106, 108, 110, 112, 114, 116, 118) und einer peripheren Zone (126, 128, 130, 132, 134, 136, 138) zusammengesetzt ist, die die zentrale interne Zone umgibt; und
wobei dasselbe Hauptfrequenzband BP, in einem Block oder in mehreren Sektionen, die das Gesamtband ganz oder teilweise bilden, in seiner Gesamtheit jeder zentralen internen Zone (106, 108, 110, 112, 114, 116, 118) zugeordnet ist,
**dadurch gekennzeichnet, dass**
gemäß dem Senderessourcenzuordnungsplan (102, 302) das Hauptband BP in ein erstes Bündel (142) mit einer ersten ganzen Zahl n1 gleich oder größer als 2 von benachbarten oder separaten Hauptteilbändern, jeweils aus einem Block, unterteilt ist; und
wobei die zentrale interne Zone (106, 108, 110, 112, 114, 116, 118) jedes Empfangsspots (26, 28, 30, 32, 34, 36, 38) mit einem nahen Skalenfaktor, der die Größe der zentralen internen Zone repräsentiert, in dasselbe erste regelmäßige Zellenmuster (146) von Zellen unterteilt ist, in denen die verschiedenen Hauptteilbänder des ersten Bündels (142) gleichmäßig verteilt sind, wobei die Anzahl von Zellen des Zellenmusters gleich der ersten Anzahl n1 von Hauptteilbändern des ersten Bündels ist.

2. Mehrstrahl-Satellitenfunkkommunikationssystem nach Anspruch 1, bei dem
gemäß dem Senderessourcenzuordnungsplan (102, 302) das Hauptfrequenzband BP Teil des Gesamtbandes ist; und die Frequenzen des Gesamtbandes BT, die nicht Teil des Hauptbandes BP sind, ein sekundäres Band BS aus einem Block oder aus mehreren Sektionen bilden, das in ein zweites Bündel (152) mit einer ganzen Zahl n2 gleich oder größer als 3 von benachbarten oder separaten sekundären Teilbändern jeweils aus einem Block unterteilt wird, verteilt über alle peripheren Zonen (126, 128, 130, 132, 134, 136, 138) der Empfangsspots (26, 28, 30, 32, 34, 36, 38) gemäß einem Mehrfarbschema mit n2 Farben von sekundären Teilbändern.

3. Mehrstrahl-Satellitenfunkkommunikationssystem nach Anspruch 2, wobei die zweite Anzahl n2 von sekundären Teilbändern eine ganze Zahl ist, die in dem Satz von Zahlen 3, 4, 7 und 12 enthalten ist.

4. Mehrstrahl-Satellitenfunkkommunikationssystem nach einem der Ansprüche 1 bis 3, wobei
das Zellenmuster (146) ein Muster von Zellen derselben Größe und von dreieckiger, quadratischer oder hexagonaler Form ist und/oder
die Anzahl von Zellen n1 zwischen 2 und 19 ist.

5. Mehrstrahl-Satellitenfunkkommunikationssystem nach einem der Ansprüche 1 bis 4, wobei
der Rückkanalsenderessourcenplaner und -zuordner (18) zum Zuordnen einer Rückkanalsenderessource im Hinblick auf ein Frequenzteilband und eine Polarisation zu einem Senderendgerät (14, 16) konfiguriert ist, wenn von diesem angefordert, in Abhängigkeit von der geographischen Position des Senderendgeräts und des Ressourcenzuordnungsplans (302), gemäß dem
eine dritte ganze Zahl n3 gleich oder größer als 2 von verschiedenen Polarisationen, die einen Satz von Polarisationszuständen bilden, über den Satz von Empfangsspots verteilt und gemäß einem mehrfarbigen Verteilungsschema mit n3 Polarisationsfarben auf der farbigen geographischen Zuordnungskarte der Frequenzteilbänder überlagert ist.

6. Mehrstrahl-Satellitenfunkkommunikationssystem nach Anspruch 5, wobei
die dritte Anzahl n3 von Polarisationen gleich 2 ist und die Polarisationen des Paares die linkszirkuläre Polarisation und die rechtszirkuläre Polarisation oder eine erste Polarisation entlang einer ersten Achse und eine zweite Polarisation entlang einer zweiten Achse orthogonal zur ersten Achse sind.

7. Mehrstrahl-Satellitenfunkkommunikationssystem nach einem der Ansprüche 1 bis 6, wobei
die Empfangsantenne (20) zum Bilden von Empfangsspots (26, 28, 30, 32, 34, 36, 38) konfiguriert ist, die jeweils gemäß einer Gaußschen Regel beleuchtet werden und jeweils einen Roll-off gleich oder größer als 7 dB an ihren Rändern haben.

8. Mehrstrahl-Satellitenfunkkommunikationssystem nach einem der Ansprüche 1 bis 6, das ferner ein automatisches System zum Korrigieren der Ablenkung der Antenne umfasst, die insbesondere durch Lagevariationen der Plattform bewirkt wird.

9. Mehrstrahl-Satellitenfunkkommunikationssystem nach einem der Ansprüche 1 bis 8, das ferner umfasst:
einen Satz von Senderendgeräten, die über den Satz von Spots verteilt sind, und jedes Endgerät ein Mittel zur geographischen Positionierung (44) umfasst, das genau genug ist, um zu bestimmen, in welchem Spot es sich befindet, ob es sich in einer internen Zone oder in einer peripheren Zone befindet, und, wenn es sich in einer internen Zone befindet, in welcher Zelle es sich befindet.

10. Mehrstrahl-Satellitenfunkkommunikationssystem nach einem der Ansprüche 1 bis 9, wobei
der Rückkanalsenderessourcenplaner und -zuordner (18) über alle Endgeräte und/oder über ein oder mehrere Zusatzstationen verteilt oder in einer Station (54) zum Steuern und Planen von Ressourcen zentralisiert ist.

11. Mehrstrahl-Satellitenfunkkommunikationssystem nach einem der Ansprüche 1 bis 10, wobei die Größe der zentralen Zone, die den Skalenfaktor repräsentiert, in Abhängigkeit vom Empfangsspot und von der Zeit variiert.

12. Mehrstrahl-Satellitenfunkkommunikationssystem nach einem der Ansprüche 1 bis 11, konfiguriert zum Empfangen des Rückkanals durch den Satelliten in einem Band, das in dem Satz der Bänder C, X, Ku, Ka, L, S, Q und V enthalten ist.

13. Verfahren zum vollständigen oder teilweisen Wiederverwenden von Frequenzen eines Gesamtbandes, das einem Rückkanal in einem Breitband-Mehrstrahl-Satellitenfunkkommunikationssystem zugeordnet ist, wobei das System Folgendes umfasst:
- einen Satelliten mit einer Mehrstrahl-Empfangsantenne, konfiguriert zum Bilden eines Satzes von wenigstens zwei benachbarten Empfangsspots einer terrestrischen Versorgung; und
- einen Satz von Senderendgeräten, die über den Satz von Spots verteilt sind, wobei jedes Endgerät ein Mittel zur geographischen Positionierung umfasst;
wobei das Verfahren die folgenden Schritte beinhaltet:
- geographisches Unterteilen (504) jedes Empfangsspots in eine zentrale interne Zone und eine periphere Zone, die die zentrale interne Zone umgibt; dann
- Zuordnen (506) eines Hauptfrequenzteilbandes, aus einem Block oder mehreren Sektionen, die das Gesamtband ganz oder teilweise bilden, zu den internen Zonen des Satzes von Empfangsspots,
**dadurch gekennzeichnet, dass** das Verfahren ferner die folgenden Schritte beinhaltet:
- Unterteilen (508) des Hauptbandes in ein erstes Bündel einer ersten ganzen Zahl n1 gleich oder größer als 2 von benachbarten oder getrennten Hauptteilbändern jeweils aus einem Block; und
- Unterteilen (510) jeder zentralen internen Zone eines Empfangsspots mit einem nahen Skalenfaktor, der die Größe der internen Zone repräsentiert, in dasselbe Zellenmuster von Zellen, in denen die unterschiedlichen Hauptteilbänder des ersten Bündels gleichmäßig verteilt sind, wobei die Anzahl von Zellen des Zellenmusters gleich der ersten Zahl n1 von sekundären Teilbändern des ersten Bündels ist.

14. Verfahren zum vollständigen oder teilweisen Wiederverwenden von Frequenzen nach Anspruch 13, das ferner die folgenden Schritte beinhaltet:
für jedes Endgerät, das eine Senderessource wünscht:
- Feststellen (512), in welchem Spot es sich befindet und ob es sich in einer internen Zone oder in einer peripheren Zone befindet; und
- Feststellen, wenn sich das Endgerät in einer internen Zone befindet, in welcher Zelle es sich befindet, und in diesem Fall
- Zuordnen (514), zu dem Endgerät, des Teilbandes, das der Zelle des Empfangsspots zugeordnet wurde, in dem sich das Endgerät befindet.

15. Verfahren zur Frequenzwiederverwendung nach einem der Ansprüche 13 bis 14, wobei
das Hauptfrequenzband Teil des Gesamtbandes bildet, und das ferner die folgenden Schritte beinhaltet:
- Unterteilen (604) der Frequenzen des Gesamtbandes, die nicht Teil des Hauptbandes bilden, in ein zweites Bündel mit einer Anzahl n2 gleich oder größer als 3 von separaten oder benachbarten sekundären Teilbändern aus einem Block, die über den Satz von peripheren Zonen gemäß einem Mehrfarbenschema mit n2 Farben von sekundären Teilbändern verteilt sind; und
- Zuordnen (614), für jedes Endgerät, das eine Senderessource wünscht, nachdem festgestellt wurde, in welchem Spot es sich befindet und ob es sich in einer internen oder einer peripheren Zone befindet, wenn sich das Endgerät in einer peripheren Zone befindet, des zusätzlichen Teilbandes zu dem Endgerät, das der peripheren Zone des Empfangspunktes zugeordnet wurde, in dem sich das Endgerät befindet.

16. Verfahren zur Frequenzwiederverwendung nach einem der Ansprüche 13 bis 15, das ferner die folgenden Schritte beinhaltet:
- Verteilen (704), über den Satz von Empfangsspots, einer dritten ganzen Zahl n3 gleich oder größer als 2 von Polarisationen, die einen Satz von Polarisationszuständen bilden, durch Überlagern von Teilbändern auf die geographische Zuordnungskarte gemäß einem mehrfarbigen Verteilungsschema mit n3 Polarisationsfarben; und
- Zuordnen (706), für jedes Endgerät, das eine von einem Frequenzteilband und einer Polarisation gebildete Senderessource erfordert, nachdem festgestellt wurde, in welchem Empfangsspot es sich befindet, der Polarisation zu dem Endgerät, die dem Empfangsspot zugeordnet wurde, in dem sich das Endgerät befindet, zusätzlich zu dem Teilband, das ihm in Schritt (510) oder in Schritt (604) zugeordnet wurde.

17. Verfahren zur Frequenzwiederverwendung nach einem der Ansprüche 13 bis 16, wobei die Größe der zentralen Zone in Abhängigkeit von dem Spot und der Zeit variiert.

## Claims

1. A broadband multi-beam satellite radiocommunication system configured for the complete or partial reuse of frequencies from a total band BT allocated to a feedback channel (4), comprising:
- a satellite (10) having a multi-beam reception antenna (20) configured to form a set (24) of at least two adjacent reception spots (26, 28, 30, 32, 34, 36, 38) of a terrestrial coverage (40); and
- a set of transmitter terminals (14, 16) distributed over the set of spots, each terminal (14, 16) comprising a geographical positioning means (44) and a means (46) for transmitting an allocated transmission resource;
- a feedback channel transmission resource scheduler and allocator (18), which is produced in the form of one or more electronic computers (52), configured to allocate a feedback channel transmission resource to a transmitter terminal (14, 16), when requested thereby, in terms of a frequency sub-band as a function of the geographical position of the transmitter terminal (14, 16), and a transmission resource allocation schedule (102, 302), according to which,
each reception spot (26, 28, 30, 32, 34, 36, 38) is made up of a central internal zone (106, 108, 110, 112, 114, 116, 118) and a peripheral zone (126, 128, 130, 132, 134, 136, 138) surrounding said central internal zone; and
the same main frequency band BP in one section or in a plurality of sections, which form part or all of the total band, is allocated in its entirety to each central internal zone (106, 108, 110, 112, 114, 116, 118),
**characterised in that**,
according to the transmission resource allocation schedule (102, 302), the main band BP is divided into a first bundle (142), with a first integer n1 greater than or equal to 2, of adjacent or separate main sub-bands, each of which is in one section; and
the central internal zone (106, 108, 110, 112, 114, 116, 118) of each reception spot (26, 28, 30, 32, 34, 36, 38) is divided, for a near scale factor representing the size of the central internal zone, into the same first regular cellular pattern (146) of cells, in which the different main sub-bands of the first bundle (142) are unitarily distributed, the number of cells of the cellular pattern being equal to the first number n1 of main sub-bands of the first bundle.

2. The multi-beam satellite radiocommunication system according to claim 1, wherein,
according to the transmission resource allocation schedule (102, 302), the main frequency band BP forms part of the total band and the frequencies of the total band BT that do not form part of the main band BP form a secondary band BS in one section or in a plurality of sections that divides into a second bundle (152), with an integer n2 greater than or equal to 3, of adjacent or separate secondary sub-bands, each of which is in one section, distributed over all of the peripheral zones (126, 128, 130, 132, 134, 136, 138) of the reception spots (26, 28, 30, 32, 34, 36, 38) according to a multi-colour scheme with n2 colours of secondary sub-bands.

3. The multi-beam satellite radiocommunication system according to claim 2, wherein the second number n2 of secondary sub-bands is an integer included in the set of numbers 3, 4, 7 and 12.

4. The multi-beam satellite radiocommunication system according to any one of claims 1 to 3, wherein
the cellular pattern (146) is a pattern of cells of the same size and of triangular, square or hexagonal shape and/or
the number of cells n1 is between 2 and 19.

5. The multi-beam satellite radiocommunication system according to any one of claims 1 to 4, wherein
the feedback channel transmission resource scheduler and allocator (18) is configured to allocate a feedback channel transmission resource in terms of a frequency sub-band and a polarisation to a transmitter terminal (14, 16), when requested thereby, as a function of the geographical position of the transmitter terminal and of the resource allocation schedule (302), according to which
a third integer n3, greater than or equal to 2, of various polarisations forming a set of polarisation states is distributed over the set of reception spots and is superposed according to a multi-coloured distribution scheme with n3 polarisation colours on the coloured geographical allocation map of the frequency sub-bands.

6. The multi-beam satellite radiocommunication system according to claim 5, wherein
the third number n3 of polarisations is equal to 2 and the polarisations of the pair are the left-hand circular polarisation and the right-hand circular polarisation or a first polarisation along a first axis and a second polarisation along a second axis orthogonal to the first axis.

7. The multi-beam satellite radiocommunication system according to any one of claims 1 to 6, wherein
the reception antenna (20) is configured to form reception spots (26, 28, 30, 32, 34, 36, 38), each illuminated according to a Gaussian rule and each having a roll-off on its edge that is greater than or equal to 7 dB.

8. The multi-beam satellite radiocommunication system according to any one of claims 1 to 6, further comprising an automated system for correcting the depointing of the antenna that is particularly caused by attitude variations of the platform.

9. The multi-beam satellite radiocommunication system according to any one of claims 1 to 8, further comprising
a set of transmitter terminals distributed over the set of spots and each terminal comprises a geographical positioning means (44) that is precise enough to determine which spot it is located in, if it is located in an internal zone or in a peripheral zone, and which cell it is located in when it is located in an internal zone.

10. The multi-beam satellite radiocommunication system according to any one of claims 1 to 9, wherein
the feedback channel transmission resource scheduler and allocator (18) is distributed over all of the terminals and/or over one or more auxiliary stations or is centralised in a station (54) for controlling and scheduling resources.

11. The multi-beam satellite radiocommunication system according to any one of claims 1 to 10, wherein the size of the central zone, which represents the scale factor, varies as a function of the reception spot and of time.

12. The multi-beam satellite radiocommunication system according to any one of claims 1 to 11, configured to receive the feedback channel by the satellite in a band included in the set of bands C, X, Ku, Ka, L, S, Q and V.

13. A method for the complete or partial reuse of frequencies of a total band allocated to a feedback channel in a broadband multi-beam satellite radiocommunication system, the system comprising:
- a satellite having a multi-beam reception antenna configured to form a set of at least two adjacent reception spots of a terrestrial coverage; and
- a set of transmitter terminals distributed over the set of spots, each terminal comprising a geographical positioning means;
the method comprising the following steps:
- geographically dividing (504) each reception spot into a central internal zone and a peripheral zone surrounding the central internal zone; then
- assigning (506) a main frequency sub-band in one section or in a plurality of sections, which form part or all of the total band, to the internal zones of the set of reception spots,
**characterised in that** the method further comprises the following steps:
- dividing (508) the main band into a first bundle of a first number n1, greater than or equal to 2, of adjacent or separate main sub-bands, each in one section; and
- dividing (510) each central internal zone of a reception spot, for a near scale factor representing the size of the internal zone, into the same cellular pattern of cells in which the different main sub-bands of the first bundle are unitarily distributed, the number of cells of the cellular pattern being equal to the first number n1 of secondary sub-bands of the first bundle.

14. The method for the complete or partial reuse of frequencies according to claim 13, further comprising the following steps:
for each terminal requiring a transmission resource:
- determining (512) which spot it is located in and if it is located in an internal zone or in a peripheral zone; and
- determining, when the terminal is located in an internal zone, which cell it is located in, and in this case,
- allocating (514) to the terminal the sub-band that was allocated to the cell of the reception spot that the terminal is located in.

15. The method for frequency reuse according to any one of claims 13 to 14, wherein
the main band of frequencies forms part of the total band and which further comprises the following steps:
- dividing (604) the frequencies of the total band that do not form part of the main band into a second bundle with a number n2, greater than or equal to 3, of separate or adjacent secondary sub-bands in one section, distributed over all of the peripheral zones according to a multi-colour scheme with n2 colours of secondary sub-bands; and
- allocating (614), for each terminal requiring a transmission resource, after having determined which spot it is located in and if it is located in an internal or peripheral zone, when the terminal is located in a peripheral zone, the auxiliary sub-band to the terminal that has been allocated to the peripheral zone of the reception spot that the terminal is located in.

16. The method for frequency reuse according to any one of claims 13 to 15, further comprising the following steps:
- distributing (704), over the set of reception spots, a third integer n3, greater than or equal to 2, of polarisations forming a set of polarisation states, by superposing sub-bands on the geographical allocation map according to a multi-coloured distribution scheme with n3 polarisation colours; and
- allocating (706), for each terminal requiring a transmission resource formed by a frequency sub-band and a polarisation, after having determined which reception spot it is located in, the polarisation to the terminal that was allocated to the reception spot that the terminal is located in, in addition to the sub-band that was allocated thereto in the step (510) or the step (604).

17. The method for frequency reuse according to any one of claims 13 to 16, wherein the size of the central zone varies as a function of the spot and of time.
